# EUROPÄISCHE PATENTSCHRIFT

(11) **EP 0 987 156 B1**
(45) Veröffentlichungstag und Bekanntmachung des Hinweises auf die Patenterteilung: **09.06.2004**
(21) Anmeldenummer: 99116529.1
(22) Anmeldetag: 24.08.1999
(51) Int. Cl.: B60S 3/06, B60S 3/04

(54) **Betriebsverfahren und Behandlungsanlage für Fahrzeuge**
Method of operation and treatment installation for vehicles
Procédé de mise en oeuvre et installation de traitement pour véhicules

(30) Priorität: 15.09.1998 DE 29816527 U
(43) Veröffentlichungstag der Anmeldung: 22.03.2000
(73) Patentinhaber: WashTec Holding GmbH, 86153 Augsburg (DE)
(72) Erfinder: Windel, Günter, 63825 Schneppenbach (DE)
(74) Vertreter: Rapp, Bertram, Dr.

(56) Entgegenhaltungen:
- EP-A- 0 309 004
- EP-A- 0 700 814
- AT-B- 312 435
- DE-A- 2 231 846
- DE-C- 3 616 817
- DE-C- 19 622 391
- DE-C- 19 633 673

## Beschreibung

Die Erfindung betrifft ein Betriebsverfahren und eine Behandlungsanlage, insbesondere eine Fahrzeugwaschanlage, mit den Merkmalen im Oberbegriff des Verfahrens- und Vorrichtungshauptanspruchs (Betriebsverfahen und Behandlungsanlage nach der Art der AT-C-312 435).

Eine solche Fahrzeugwaschanlage ist beispielsweise aus der AT-C-312 435 bekannt. Sie besteht aus zwei getrennt fahrbaren Portalen, nämlich einem Waschportal und einem Trockenportal. Die beiden Portale können mittels einer Synchronisiereinrichtung mit einer Steuerung synchron und mit einem vorgebbaren Sicherheitsabstand gemeinsam bewegt werden. Die Synchronisiereinrichtung ist abschaltbar. Während des Waschvorgangs bewegen sich beide Portale synchron, wobei das mit der Trockeneinrichtung versehene Portal vorauseilt und das Waschportal nachfolgt. Am Ende dieses ersten Fahrweges wird die Synchronisiereinrichtung abgeschaltet, wobei das Trocknerportal stehenbleibt und das Waschportal alleine über das stehende Fahrzeug zurückfährt. Das Trocknerportal kann nach einer gewissen Zeit folgen und das gewaschene Fahrzeug trocknen. Bei dieser Fahrzeugwaschanlage wird die Synchronbewegung der Portale nur über die auf beide Portale einwirkende Steuerung realisiert. Weichen die Fahrbewegungen von der Vorgabe der Steuerung ab, kann es zu einer Kollision der Portale kommen.

Aus der DE-C-36 16 817 ist eine andere Fahrzeugwaschanlage bekannt, bei der zwei komplett ausgestattete Portale starr und mechanisch miteinander gekoppelt sind und sich synchron gegenüber dem stehenden Fahrzeug bewegen. Durch die mechanische Koppelung sind Kollisionen der beiden Portale ausgeschlossen. Die Anlage hat einen erheblichen Platzbedarf, der in vielen Fällen nicht gegeben ist.

Außerdem ist der Bauaufwand sehr hoch.

Die FR-A-2 574 354 lehrt eine andere Fahrzeugwaschanlage, bei der zwei Portale mechanisch miteinander über ein gemeinsames Fahrwerk gekoppelt sind und sich synchron bewegen. Die Portale haben hierbei unterschiedliche Aggregate und Funktionen. Der Portalabstand ist festgelegt und kann nicht verändert werden. Eine für manche Prozeßabschnitte bei der Fahrzeugwäsche, z.B. die Trocknung, nützliche Veränderung des Portalabstandes ist nicht möglich.

Aus der EP-A-0 309 004 ist eine Fahrzeugwaschanlage mit zwei getrennt fahrbaren Portalen bekannt, die sich unabhängig voneinander bewegen. Das vorauseilende Trocknerportal ist zusätzlich mit einer Auftragsvorrichtung für einen Schaum oder ein Reinigungsmittel ausgerüstet und trägt dieses Mittel auf das stehende Fahrzeug auf. Das mit einer Wascheinrichtung ausgerüstete Waschportal folgt dem Trocknerportal nach einer gewissen Zeit, die der gewünschten Einwirkzeit des Schaumes oder Reinigungsmittels auf der Fahrzeugoberfläche entspricht. Eine Synchronisiereinrichtung ist hier nicht vorhanden. Durch den großen Abstand der Portale bestehen während der gemeinsamen Fahrbewegung keine Kollisionsprobleme. Die für eine Fahrzeugwäsche erforderliche Zeit wird wesentlich verlängert, weil der Schaum oder das Reinigungsmittel bewußt eine verlängerte Einwirkzeit am Fahrzeug erhalten soll, die in die Prozeßzeit eingeht.

Die DE-A-195 27 828 offenbart eine weitere Fahrzeugwaschanlage mit zwei getrennt fahrbaren Portalen, wobei die Wascheinrichtung auf beide Portale aufgeteilt ist. Das vorauseilende Trocknerportal hat Seitenbürsten und das nacheilende Waschportal eine Dachbürste. Das Waschportal trägt auch das Reinigungsmittel oder den Schaum auf und führt die Radwäsche bei diesem Auftrag aus. Prozeßbedingt bewegen sich die beiden Portale unabhängig voneinander und nicht synchron.

Aus der DE-A-196 20 400 ist eine andere Doppelportalanlage bekannt, die mit seitlichen kombinierten Hochdruck- und Bürsteneinheiten ausgestattet ist.

Es ist Aufgabe der vorliegenden Erfindung, ein Betriebsverfahren und eine Behandlungsanlage bzw. Fahrzeugwaschanlage mit einer abschaltbaren Synchronisiereinrichtung aufzuzeigen, die eine bessere Funktionalität und Sicherheit hat.

Die Erfindung löst diese Aufgabe mit den Merkmalen in den Hauptansprüchen 1 und 2.

Weiterbildungen der erfindungsgemäß ausgestateten Behandlungsanlage sind in den abhängigen Ansprüchen angegeben.

Durch das Betriebsverfahren und die erfindungsgemäße Kontrolleinrichtung ist sichergestellt, daß bei Synchronbetrieb der gewünschte Abstand der beiden Portale unter allen Betriebsbedingungen erhalten bleibt. Die Kontrolleinrichtung bemerkt etwaige Abstandsänderungen, die z.B. durch Schlupf, unterschiedliche Motorenwicklungen oder andere Einflüsse hervorgerufen werden können. In der bevorzugten Ausführungsform kann die Kontrolleinrichtung in Verbindung mit der Steuerung bzw. der Synchronisiereinrichtung die Fahrbewegungen eines oder beider Portale regeln und so den gewünschten Abstand aufrechterhalten. Sie kann außerdem automatisch bei Synchronfahrten aktiviert werden.

Durch die kontrollierte synchrone Bewegung beider Portale kann in erheblichem Maß Waschzeit eingespart werden. Das bei der Anfangsbewegung vorauseilende und vorzugsweise mit einer Trockeneinrichtung ausgerüstete Portal kann eine Auftragsvorrichtung für Schaum oder ein anderes Reinigungsmittel haben. Unter Verzicht auf eine verlängerte Einwirkzeit wäscht das nachfolgende und mit einer Wascheinrichtung ausgerüstete zweite Portal das Fahrzeug während der Synchronbewegung beider Portale. Die beiden Portale halten einen für Steuer- und Regeleingriffe ausreichenden Abstand während der Synchronfahrt. Bei der erfindungsgemäßen Fahrzeugwaschanlage ergibt sich im Endeffekt eine optimale Kombination einer guten Waschwirkung mit einer möglichst kurzen Waschzeit.

Für den Trockenvorgang können die Synchronisiereinrichtung und die Kontrolleinrichtung abgeschaltet werden, um getrennte Fahrbewegungen und größere Portalabstände zu ermöglichen. Auf diese Weise ist es möglich, mit zwei Portalüberläufen einen kompletten Waschzyklus mit zweimal Waschen und einmal Trocknen durchzuführen. Für einfache Waschprogramme wird dabei die Waschzeit auf ein Minimum reduziert. Für aufwendigere Waschprogramme können zusätzliche Behandlungsvorgänge, wie z.B. Hochdruckwäschen durch separate Fahrbewegungen eines oder beider Portale durchgeführt werden. Bei solchen Vorgängen können Synchronfahrten auch entfallen.

Die Erfindung ist in den Zeichnungen beispielsweise und schematisch dargestellt. Im einzelnen zeigen:
- Figur 1:: eine Fahrzeugwaschanlage mit einer Synchronisier- und einer Kontrolleinrichtung in Seitenansicht und
- Figur 2:: eine vergrößerte Darstellung der Kontrolleinrichtung von Figur 1.

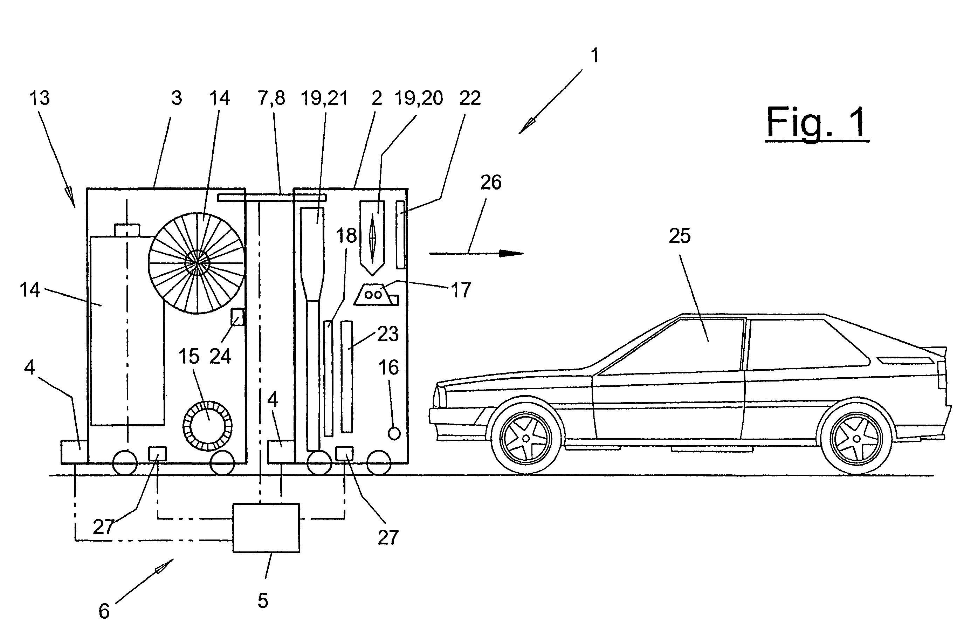

Figur 1 zeigt in Seitenansicht eine Behandlungsanlage (1) für Fahrzeuge (25) , die vorzugsweise als Fahrzeugwaschanlage (1) ausgebildet ist. Sie besitzt zwei Portale (2,3), die sich gegenüber dem vorzugsweise stehenden Fahrzeug (25) zunächst in Fahrtrichtung (26) vorwärts und anschließend wieder in Gegenrichtung zurückbewegen. Die Portale (2,3) sind mit unterschiedlichen Behandlungsaggregaten für die Durchführung des Waschprozesses und mit einer Synchronisiereinrichtung (6) sowie einer Kontrolleinrichtung (7) ausgerüstet, welche vorzugsweise beide prozeßabhängig zu- und abschaltbar sind.

Die beiden Portale (2,3) besitzen eigenständige Antriebe (4) von beliebig geeigneter Ausbildung, die z.B. aus steuer- und regelbaren frequenzgesteuerten Wechselstrommotoren bestehen.

Die Portale (2,3) haben vorzugsweise bodenseitige Fahrwerke, mit denen sie auf Bodenschienen rollen. Alternativ können die Portale auch in beliebig anderer geeigneter Weise ausgebildet sein und z.B. in der Art von Kranportalen auf aufgeständerten Schienen oder auf erhöhten Laufflächen an der Hallenwand sich bewegen. In diesem Fall haben die Portale keine vertikalen Ständer, sondern nur einen Querträger. Grundsätzlich beinhaltet der Begriff eines Portales jede geeignete Form eines Trägers oder Halters für die für den Waschprozeß benötigten Behandlungsaggregate.

Die Fahrzeugwaschanlage (1) besitzt eine Steuerung (5), die beide Portale (2,3) mit den Antrieben (4) in ihren Bewegungen steuert bzw. regelt und auch die Behandlungsaggregate steuert bzw. regelt. Die Steuerung (5) kann als Computer ausgebildet sein und ein oder mehrere Mikroprozessoren mit Daten- und Programmspeichern sowie mehreren Schnittstellen für die Ein- und Ausgabe von Daten besitzen.

Die Synchronisiereinrichtung (6) kann ein Bestandteil oder eine Zusatzkomponente zur Steuerung (5) sein und hardwaremäßig oder softwaremäßig realisiert sein. Die Synchronisiereinrichtung (6) umfaßt außer der steuerungsmäßigen Komponente noch einen oder mehrere Wegoder Geschwindigkeitsmesser (27) an den beiden Portalen (2,3), die die gefahrenen Geschwindigkeiten und/oder die Positionen der beiden Portale ermitteln. Diese Meßeinrichtungen (27) sind vorzugsweise den Antrieben (4) zugeordnet und bestehen z.B. aus Weggebern an der Motorwelle.

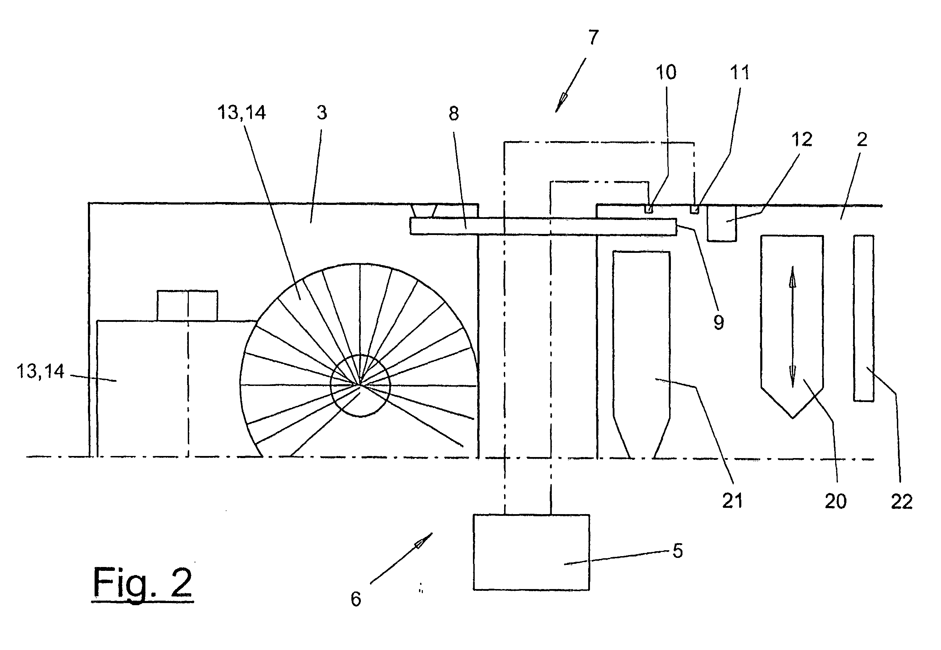

Die in Figur 2 näher dargestellte Kontrolleinrichtung (7) besteht in der gezeigten Ausführungsform aus einer Steuerstange (8), die an dem einen, vorzugsweise dem in Fahrtrichtung (26) hinteren Portal (3) befestigt ist. Die Steuerstange (8) erstreckt sich in Fahrtrichtung (26) und überbrückt den Abstand zwischen den beiden Portalen (2,3). Sie ragt mit ihrem vorderen Stangenende (9) in das Innere des vorderen Portals (2). Die Steuerstange (8) wirkt im Bereich des vorderen Stangenendes (9) mit zwei oder mehr Schaltern (10,11) zusammen, die mit gegenseitigem Abstand in Stangenrichtung bzw. Fahrtrichtung (26) hintereinander am Portal (2) positioniert sind.

Die Schalter (10) sind vorzugsweise als berührungslos arbeitende Sensoren ausgebildet. Beispielsweise handelt es sich um Lichtschranken oder Reflexlichttaster. Die Schalter (10,11) können auch als induktiv oder kapazitiv arbeitende Näherungsschalter oder Abstandsmesser ausgebildet sein, die mit der Steuerstange (8) zusammenwirken.

Die Kontrolleinrichtung (7) und insbesondere die Schalter (10,11) sind mit der Steuerung (5) und/oder der Synchronisiereinrichtung (6) verbunden. Für die Synchronfahrt werden die beiden Portale (2,3) auf den erforderlichen Sicherheitsabstand auseinanderbewegt. Dieser gewünschte Abstand ist dann erreicht, wenn der in Fahrtrichtung (26) hintere Schalter (10) das Vorhandensein der Steuerstange (8) feststellt und der in Fahrtrichtung (26) davorliegende Schalter (11) keinen Schaltkontakt mit der Steuerstange (8) hat. Figur 2 zeigt diese Portalstellung. Die Länge der Steuerstange (8) und die Positionen der Schalter (10,11) sind zum Erreichen des gewünschten Abstands entsprechend aufeinander abgestimmt.

Falls der Portalabstand größer als gewollt wird, verliert der Schalter (10) den Schaltkontakt mit der Steuerstange (8), so daß beide Schalter (10,11) die Schaltmeldung "offen" an die Steuerung (5) geben. In diesem Fall verändert die Steuerung (5) oder die Synchronisiereinrichtung (6) die Fahrgeschwindigkeit eines oder beider Portale (2,3) bis der gewünschte Portalabstand wieder hergestellt ist und der Schalter (10) wieder die Steuerstange (8) erfaßt und schließt. Vorzugsweise wirkt dabei das hintere Portal (3) als Masterportal und gibt die Geschwindigkeiten der Synchronbewegung vor. Das vordere Portal (2) wird dann zur Verringerung des Portalabstandes in seiner Fahrgeschwindigkeit über den Antrieb (4) gebremst. Alternativ kann es auch kurzzeitig zu diesem Zweck stehenbleiben.

Wird andererseits der Portalabstand kleiner als gewünscht, überfährt das vordere Stangenende (9) den vorderen Schalter (11), so daß dieser schließt. Zur Korrektur werden die beiden Portale (2,3) wieder auseinanderbewegt, wobei vorzugsweise das vordere Portal (2) beschleunigt wird. Alternativ oder zusätzlich kann auch das hintere Portal (3) kurzzeitig stehenbleiben.

Die Kontrolleinrichtung (7) wird bei Aktivierung der Synchronisiereinrichtung (6) automatisch zugeschaltet. Andererseits wird sie zusammen mit der Synchronisiereinrichtung (6) auch wieder abgeschaltet, wenn kein Synchronbetrieb der Portale (2,3) erwünscht ist.

In Variation zum beschriebenen Ausführungsbeispiel kann auch das vorderer Portal (2) das Masterportal bilden und die Geschwindigkeit vorgeben. In einer weiteren Abwandlung können beide Portale (2,3) gleichberechtigt sein. Die Veränderung des Relativabstandes beider Portale (2,3) kann dabei auch in beliebig anderer geeigneter Weise vorgenommen werden, indem z.B. beide Portale (2,3) in ihren Fahrgeschwindigkeiten kurzzeitig bis zum Erreichen des Soll-Abstandes verändert werden.

Als zusätzliche Sicherheitsmaßnahme kann am vorderen Portal (2) ein mechanischer Anschlag (12) angeordnet sein, an dem die Steuerstange (8) bei Erreichen eines Mindestabstandes anstößt. Hier kann ein Endschalter angeordnet sein, der in einem solchen Fall die Antriebe (4) des auffahrenden Portals oder beider Portale als Notfallreaktion abschaltet.

In der gezeigten Ausführungsform befindet sich die Steuerstange (8) am oberen Ende der Portale (2,3) im Bereich von deren Querträgern. Die beiden Schalter (10,11) sind z.B. oberhalb der Steuerstange (8) am Querträger des Portals (2) befestigt. In einer Abwandlung kann der Schalter (11) auch die Funktion des Endschalters übernehmen und am Anschlag (12) angeordnet sein, welcher sich ebenfalls am Querträger des Portals (2) befindet.

Die Portale (2,3) können in beliebig geeigneter Weise mit Behandlungsaggregaten bestückt sein. Im gezeigten und bevorzugten Ausführungsbeispiel hat das in Ausgangsstellung und in Fahrtrichtung (26) vorn liegende Portal (2) eine Trockeneinrichtung (19) in beliebig geeigneter Ausführung. Diese weist z.B. eine entsprechend der Fahrzeugkontur heb- und senkbare Dachdüse (20) und zwei beidseitige Seitendüsen (21) auf. Die Düsen (20,21) können mit Abstand hintereinander angeordnet sein und eigene oder gemeinsame Lüfter bzw. Ventilatoren aufweisen. Die Lüfter oder Ventilatoren (nicht dargestellt) sind vorzugsweise in ihrer Kapazität so groß ausgelegt, daß das Fahrzeug (25) mit einer Überfahrbewegung getrocknet werden kann.

Das Portal (2) hat außerdem mindestens eine Auftragsvorrichtung (22,23) für den Auftrag eines geeigneten flüssigen oder schaumförmigen Reinigungsmittels auf das Fahrzeug (25). Dies kann ein sog. Aktivschaum, ein Flüssigreiniger, eine Insektenlöser oder dgl. sein. In der gezeigten Ausführungsform hat die Auftragsvorrichtung (22) eine Dachdüse, und ist am vorderen Portalende positioniert. Eine zweite Auftragsvorrichtung (23) für die Seitenflächen des Fahrzeugs (25) ist mit Abstand in Fahrtrichtung (26) hinter der Auftragsvorrichtung (22) und unterhalb von dieser angeordnet. In Abwandlung der gezeigten Ausführungsform kann auch nur die eine vordere Auftragsvorrichtung (22) vorhanden sein, die dann mit einer entsprechenden Seitenerstreckung auch die Fahrzeugseitenflächen einsprüht oder einschäumt.

Am Portal (2) kann zudem noch eine Hochdruckeinrichtung für die Fahrzeugwäsche vorhanden sein. Diese besteht z.B. aus einer konturengesteuerten heb- und senkbaren Dachdüse (17) und zwei mit Abstand dahinter angeordneten und ebenfalls gegenüber der Seitenkontur des Fahrzeuges (25) gesteuerten Seitendüsen (18). Die Düsen (17,18) sprühen Waschwasser unter hohem Druck auf das Fahrzeug (25). Sie können dabei gegenüber der besprühten Fahrzeugfläche in der geeigneten Neigung durch eine Drehung angestellt werden und gegebenenfalls auch innerhalb eines begrenzten Winkelbereichs oszillieren.

Das Portal (2) kann ferner noch an geeigneter Stelle einen Felgenreiniger (16) aufweisen, der z.B. als Sprühvorrichtung in Radhöhe ausgebildet ist. Hierdurch wird ein geeignetes Reinigungsmittel auf die Radfelgen gesprüht, das den Schmutz und den Bremsenabrieb anlöst.

Das zweite und in Ausgangsstellung bzw. Fahrtrichtung (26) hintere Portal (3) ist vorzugsweise als Waschportal ausgebildet. Es trägt eine entsprechend ausgebildete Wascheinrichtung (13), die z.B. mehrere Waschbürsten (14) aufweist. Dies können ein oder mehrere in bekannter Weise heb- und senkbare Dachbürsten und ein oder mehrere seitlich zustellbare Seitenbürsten mit Konturensteuerung sein. Die Waschbürsten (14) können eine beliebig geeigneten Belag aufweisen, der z.B. dünne, haarförmige Borsten aus synthetischen Fasern besitzt oder streifenförmige Borsten oder lappenförmige Waschelemente aus textilen Fasermaterialien oder aus offen- oder geschlossenporigen Kunststoffschäumen hat.

Außerdem kann das Portal (3) eine Radwascheinrichtung (15) besitzen. Am Portal (3) kann außerdem eine Spülvorrichtung (24) angeordnet sein, mit der Spülwasser, demineralisiertes Wasser oder geeignete andere Flüssigkeiten aufgetragen werden. In Ergänzung hierzu können außerdem an geeigneter Stelle eine oder mehrere geeignete Auftragsvorrichtungen für eine Trockenhilfe oder für Konservierungssubstanzen, wie z.B. Heißwachs oder dergleichen (nicht dargestellt) oder für Shampoo, Waschwasser oder andere Substanzen am Portal (3) angeordnet sein.

Nachfolgend werden einige typische Funktionsweisen und Waschprozesse der Fahrzeugwaschanlage (1) beschrieben:

Im einfachsten Waschprogramm findet eine Fahrzeugwäsche mit den Waschbürsten (14) und eine Trocknung statt, wobei das stehende Fahrzeug (25) zweimal von den Portalen (2,3) in einem Vorwärtshub und einem Rückwärtshub überfahren wird. Beim Vorwärtshub bewegen sich beide Portale (2,3) synchron, wobei die Synchronisiereinrichtung (6) und die Kontrolleinrichtung (7) eingeschaltet sind. Aus der Ausgangsposition bewegt sich das Portal (2) zunächst auf den für die Fahrbewegung erforderlichen Sicherheitsabstand nach vorn in Fahrtrichtung (26) und stoppt dann. Aus dieser Stellung bewegen sich beide Portale (2,3) synchron in Fahrtrichtung (26), wobei sie gleichzeitig starten und mit gleicher Geschwindigkeit und unter Beibehaltung des eingestellten Abstandes in Fahrtrichtung (26) sich bewegen. Das vordere Portal (2) trägt das flüssige oder schaumförmige Reinigungsmittel auf das Fahrzeug (25) auf. Das nachfolgende Portal (3) wäscht dann das Fahrzeug (25). Der kurz vorher aufgetragene frische Schaum bzw. das Reinigungsmittel bieten für die nachfolgenden Waschbürsten (14) günstige Gleitbedingungen. Die Reibung der Bürstenelemente auf der Fahrzeugoberfläche wird herabgesetzt. Bei den Radwäschen stoppen jeweils beide Portale (2,3) und fahren danach synchron weiter. Durch die Synchronbewegung beider Portale (2,3) wird der Waschgang mit hoher Effizienz und möglichst geringer Taktzeit durchgeführt.

Am Ende des Vorwärtshubes stehen beide Portale (2,3) hinter dem Fahrzeug (25). Das Portal (3) bewegt sich dann als erstes über das Fahrzeug (25) wieder zurück, wobei das Portal (2) zunächst stehenbleibt. Das Portal (3) führt dann noch einmal einen Waschvorgang aus und trägt außerdem durch die bei der Rückwärtsfahrt hintenliegende Spülvorrichtung (24) Spülwasser und gegebenenfalls Konservierungssubstanzen auf die Fahrzeugoberfläche auf. Das Trocknerportal (2) folgt mit seitlichem Abstand und trocknet das Fahrzeug (25) in einem Überlauf. Beide Portale (2,3) können sich hierbei mit vergrößertem Abstand und synchron bewegen. Alternativ können beide Portale sich aber auch vollkommen eigenständig bewegen. Bei der Rückwärtsfahrt ist die Kontrolleinrichtung (7) wegen des vergrößerten Portalabstandes vorzugsweise abgeschaltet. Am Ende des Rückwärtshubes stehen beide Portale (2,3) wieder in der Ausgangsstellung und der Waschvorgang ist beendet.

In einem erweiterten Waschvorgang kann die normale Fahrzeugwäsche mit einer Hochdruckwäsche kombiniert werden. In diesem Fall führt das vordere Portal (2) zunächst einen Vorwärtshub aus, bei dem es sich alleine bewegt und Schaum oder Reinigungschemikalien auf das Fahrzeug (25) aufträgt. Das Waschportal (3) bleibt dabei stehen. Bei einem Rückhub führt dann das Trocknerportal (2) eine Hochdruckwäsche aus, wobei z.B. die Seitendüsen (18) die Seitenwäsche vornehmen. Aus der Endstellung heraus werden beide Portale (2,3) dann wieder über die Synchroneinrichtung (6) und die Kontrolleinrichtung (7) gekoppelt und synchron in Fahrtrichtung (26) bewegt. Das Trocknerportal (2) führt mit der Dachdüse (20) eine weitere Hochdruckwäsche aus, während das Waschportal (3) die Bürstenwäsche vornimmt. Der Rücklauf kann dann wieder der gleiche wie bei der normalen vorbeschriebenen Wäsche sein, wobei das Waschportal (3) einen zweiten Bürstenwaschvorgang mit nachfolgenden Spül- und Konservierungsauftrag vornimmt und das Trocknerportal mit Abstand folgt. Die Gesamtwaschzeit wird durch die Einschaltung der Hochdruckwäsche dabei nur geringfügig erhöht.

In einer weiteren Variante kann auch nur eine reine Hochdruckwäsche stattfinden, die durch das Trocknerportal (2) ausgeführt wird. Dieses trägt zunächst in einem ersten Vorwärtshub Schaum oder Reinigungsmittel auf das Fahrzeug (25) auf und führt beim anschließenden Rückwärtshub mit den Seitendüsen (18) die Hochdruck-Seitenwäsche durch. Anschließend bewegen sich beide Portale (2,3) wieder in der vorbeschriebenen Weise synchron und gekoppelt nach vorn, wobei das Trocknerportal (2) mit der Dachdüse (19) die Hochdruckwäsche in den oberen und Dachbereichen des Fahrzeuges (25) durchführt und das nachfolgende Waschportal (3) das Fahrzeug spült. Der Rückwärtshub kann dann wieder zeitversetzt ausgeführt werden, wobei das dann vorauslaufende Waschportal (3) Konservierungssubstanzen und Trockenhilfe aufträgt und das Portal (2) die Trocknung bewirkt.

Abwandlungen der gezeigten und beschriebenen Ausführungsform sind in verschiedener Weise möglich. Zum einen kann die Kontrolleinrichtung (7) in beliebig anderer geeigneter Weise ausgebildet sein und z.B. Abstandssensoren an den zugekehrten Portalseiten aufweisen. Der Abstand kann auch auf mechanischem Wege konstant gehalten werden. Im weiteren kann die Bestückung der Portale (2,3) variieren, indem z.B. auf die Hochdruckwascheinrichtung verzichtet wird. Die Fahrzeugbehandlungsanlage (1) kann auch entsprechend der DE-A-196 20 400 als Doppelportalanlage mit seitlichen kombinierten Hochdruck- und Bürsteneinheiten und einer entsprechenden Betriebstechnik ausgebildet sein. Ferner sind andere Bauformen und Portalbestückungen gemäß des anderen Standes der Technik möglich. Zudem können mehr als zwei Portalen vorhanden sein, wobei die Kontrolleinrichtung (7) zwischen nur zwei oder auch zwischen mehr Portalen angeordnet sein kann. In weiterer Abwandlung kann die Behandlungsanlage statt als Waschanlage als Polieranlage oder als beliebig andere Behandlungsanlage ausgebildet sein.

### BEZUGSZEICHENLISTE

- 1: Waschanlage
- 2: Portal, M1
- 3: Portal, M2
- 4: Antrieb
- 5: Steuerung
- 6: Synchronisiereinrichtung
- 7: Kontrolleinrichtung
- 8: Steuerstange
- 9: Stangenende
- 10: Schalter
- 11: Schalter
- 12: Anschlag
- 13: Wascheinrichtung
- 14: Waschbürsten
- 15: Radwascheinrichtung
- 16: Felgenreiniger
- 17: Hochdruckdüse, Dachdüse
- 18: Hochdruckdüse, Seitendüse
- 19: Trockeneinrichtung
- 20: Dachdüse
- 21: Seitendüse
- 22: Auftragsvorrichtung, Schaum, Reinigungsmittel
- 23: Auftragsvorrichtung, Schaum, Reinigungsmittel
- 24: Spülvorrichtung
- 25: Fahrzeug
- 26: Fahrtrichtung
- 27: Weg- oder Geschwindigkeitsmesser

## Patentansprüche

1. Verfahren zum Betrieb einer Behandlungsanlage (1) für Fahrzeuge (25), insbesondere einer Waschanlage, mit mindestens zwei getrennt fahrbaren Portalen (2,3), die sich mittels einer abschaltbaren Synchronisiereinrichtung (6) synchron bewegen können, **dadurch gekennzeichnet, dass** der Abstand zwischen den Portalen (2,3) zwischen einem größeren und einem kleineren Abstand als gewünscht mittels einer Kontrolleinrichtung (7) derart kontrolliert wird, dass er während der Behandlung eines Fahrzeugs auf die gewünschte Größe gesteuert oder geregelt wird.

2. Behandlungsanlage für Fahrzeuge (25), insbesondere Fahrzeugwaschanlage, mit mindestens zwei getrennt fahrbaren Portalen (2,3), die eine abschaltbare Synchronisiereinrichtung (6) aufweisen, **dadurch gekennzeichnet, dass** die Fahrzeugwaschanlage (1) eine Kontrolleinrichtung (7) für den Abstand zwischen den Portalen (2,3) und für dessen Steuerung oder Regelung auf die gewünschte Größe aufweist, damit der Abstand während der Behandlung eines Fahrzeugs zwischen einem größeren und einem kleineren Abstand auf die gewünschte Größe gesteuert oder geregelt wird.

3. Behandlungsanlage nach Anspruch 2, **dadurch gekennzeichnet, dass** die Kontrolleinrichtung (7) mit der Synchronisiereinrichtung (6) schaltbar ist.

4. Behandlungsanlage nach Anspruch 3, **dadurch gekennzeichnet, dass** die Kontrolleinrichtung (7) mindestens eine zwischen den Portalen (2,3) sich erstreckende Steuerstange (8) und mehrere die Stangenposition ermittelnde Schalter (10, 11) aufweist.

5. Behandlungsanlage nach Anspruch 4, **dadurch gekennzeichnet, daß** die Steuerstange am einen Portal (2) und die Schalter (10, 11) am anderen Portal (3) angeordnet sind, wobei die Schalter (10, 11) in Stangen- oder Fahrtrichtung (26) mit Abstand hintereinander positioniert sind.

6. Behandlungsanlage nach einem der Ansprüche 2 bis 5, **dadurch gekennzeichnet, daß** die Schalter (10,11) als berührungslos arbeitende Sensoren ausgebildet sind.

7. Behandlungsanlage nach einem der Ansprüche 2 bis 6, **dadurch gekennzeichnet, daß** das eine Portal (2) mindestens eine Auftragsvorrichtung (22,23) für ein schaumförmiges oder flüssiges Reinigungs- oder Lösemittel und das andere Portal (3) eine Wascheinrichtung (13), vorzugsweise mit ein oder mehreren Waschbürsten (14), aufweisen.

8. Behandlungsanlage nach einem der Ansprüche 2 bis 7, **dadurch gekennzeichnet, daß** die Synchronisiereinrichtung (6) und die Kontrolleinrichtung (7) während des Betriebs der Auftragsvorrichtung(en) (22,23) eingeschaltet sind.

9. Behandlungsanlage nach einem der Ansprüche 2 bis 8, **dadurch gekennzeichnet, daß** die Antriebe (4) der Portale (2,3) in der Geschwindigkeit steuerbar sind.

10. Behandlungsanlage nach einem der Ansprüche 2 bis 9, **dadurch gekennzeichnet, daß** die Geschwindigkeit eines Portals (2,3) nach der Geschwindigkeit des anderen Portals (3,2) im Synchronbetrieb regelbar ist.

11. Behandlungsanlage nach Anspruch 10, **dadurch gekennzeichnet, daß** die Geschwindigkeit des mit der Auftragsvorrichtung (22,23) ausgerüsteten Portals (2) regelbar ist.

12. Behandlungsanlage nach einem der Ansprüche 2 bis 11, **dadurch gekennzeichnet, daß** die Synchronisiereinrichtung (6) mit einer Steuerung (5) verbunden ist und Weg- oder Geschwindigkeitsmesser (27) für beide Portale (2,3) aufweist.

13. Behandlungsanlage nach einem der Ansprüche 2 bis 12, **dadurch gekennzeichnet, daß** die Kontrolleinrichtung (7) mit der Steuerung (5) verbunden ist.

14. Behandlungsanlage nach einem der Ansprüche 2 bis 13, **dadurch gekennzeichnet, da**ß eine Auftragsvorrichtung (22) an dem in Fahrtrichtung (26) vorderen Ende des Portals (2) angeordnet ist.

15. Behandlungsanlage nach einem der Ansprüche 2 bis 14, **dadurch gekennzeichnet, daß** das Portal (2) mit der Auftragsvorrichtung (22) eine Trockeneinrichtung (19) aufweist.

## Claims

1. Method for operation of a treatment installation (1) for vehicles (25), in particular a washing installation, with at least two portals (2, 3) which can be made to travel separately and are able to move synchronously through a synchronising device (6) which can be switched off, **characterised in that** the distance between the portals (2, 3) is monitored by means of a monitoring device (7) between a larger and a smaller distance than required so that it is controlled or regulated to the desired magnitude during the treatment of a vehicle.

2. Treatment installation for vehicles (25), in particular vehicle washing installation, with at least two portals (2, 3) which can be made to travel separately and exhibit a synchronising device (6) which can be switched off, **characterised in that** the vehicle washing installation (1) exhibits a monitoring device (7) for the distance between the portals (2, 3) and for its control or regulation to the desired magnitude so that the distance is controlled or regulated to the desired magnitude between a larger and a smaller distance during the treatment of a vehicle.

3. Treatment installation according to claim 2, **characterised in that** the monitoring device (7) can be switched with the synchronising device (6).

4. Treatment installation according to claim 3, **characterised in that** the monitoring device (7) exhibits at least one control rod (8) extending between the portals (2, 3), and a plurality of switches (10, 11) determining the rod position.

5. Treatment installation according to claim 4, **characterised in that** the control rod is arranged on one portal (2) and the switches (10, 11) are arranged on the other portal (3), the switches (10, 11) being positioned a distance one behind the other in the rod or travelling direction (26).

6. Treatment installation according to one of claims 2 to 5, **characterised in that** the switches (10, 11) are embodied as sensors operating without contact.

7. Treatment installation according to one of claims 2 to 6, **characterised in that** one portal (2) exhibits at least one application device (22, 23) for a foam or liquid cleaner or solvent and the other portal (3) exhibits a washing device (13), preferably with one or more washing brushes (14).

8. Treatment installation according to one of claims 2 to 7, **characterised in that** the synchronising device (6) and the monitoring device (7) are switched on during the operation of the application device or devices (22, 23).

9. Treatment installation according to one of claims 2 to 8, **characterised in that** the drives (4) of the portals (2, 3) can be controlled in speed.

10. Treatment installation according to one of claims 2 to 9, **characterised in that** the speed of one portal (2, 3) can be regulated according to the speed of the other portal (3, 2) in synchronous operation.

11. Treatment installation according to claim 10, **characterised in that** the speed of the portal (2) equipped with the application device (22, 23) can be regulated.

12. Treatment installation according to one of claims 2 to 11, **characterised in that** the synchronising device (6) is connected to a control device (5) and exhibits devices (27) for measuring travel or speed for both portals (2, 3).

13. Treatment installation according to one of claims 2 to 12, **characterised in that** the monitoring device (7) is connected to the control device (5).

14. Treatment installation according to one of claims 2 to 13, **characterised in that** an application device (22) is arranged at the front end of the portal (2) in the travelling direction (26).

15. Treatment installation according to one of claims 2 to 14, **characterised in that** the portal (2) with the application device (22) exhibits a drying device (19).

## Revendications

1. Processus pour le fonctionnement d'une installation de traitement (1) pour véhicules automobiles (25), en particulier d'une installation de lavage, avec au moins deux portiques mobiles séparés (2, 3) qui peuvent se déplacer de manière synchrone au moyen d'un dispositif de synchronisation débrayable (6), **caractérisé en ce que** l'écart entre les portiques (2, 3) est contrôlé entre un écart plus grand et un écart plus petit que désiré par un dispositif de contrôle (7) de telle sorte que, pendant le traitement d'un véhicule automobile, cet écart est réglé ou commandé sur la taille désirée.

2. Installation de traitement pour véhicules automobiles (25), en particulier installation de lavage de véhicules automobiles, avec au moins deux portiques mobiles séparés (2, 3), comprenant un dispositif de synchronisation débrayable (6), **caractérisée en ce que** l'installation de lavage de véhicules automobiles (1) comporte un dispositif de contrôle (7) pour l'écart entre les portiques (2, 3) et pour leur commande ou régulation sur la taille désirée afin que l'écart pendant le traitement d'un véhicule automobile soit réglé ou commandé sur la taille désirée entre un écart plus grand et un écart plus petit.

3. Installation de traitement selon la revendication 2, **caractérisée en ce que** le dispositif de contrôle (7) est commutable avec le dispositif de synchronisation (6).

4. Installation de traitement selon la revendication 3, **caractérisée en ce que** le dispositif de contrôle (7) comporte au moins une barre de commande (8) s'étendant entre les portiques (2, 3) et plusieurs commutateurs (10, 11) déterminant la position de la barre.

5. Installation de traitement selon la revendication 4, **caractérisée en ce que** les barres de commande sont disposées sur un portique (2) et les commutateurs (10, 11) sur l'autre portique (3), les commutateurs (10, 11) étant positionnés l'un derrière l'autre avec un écart dans la direction de déplacement ou de la barre (26).

6. Installation de traitement selon l'une des revendications 2 à 5, **caractérisée en ce que** les commutateurs (10, 11) sont formés de capteurs fonctionnant sans contact.

7. Installation de traitement selon l'une des revendications 2 à 6, **caractérisée en ce qu'**un portique (2) comporte au moins un dispositif d'application (22, 23) pour un produit nettoyant ou diluant de forme mousseuse ou liquide et l'autre portique (3) un dispositif de lavage (13), de préférence avec une ou plusieurs brosses de lavage (14).

8. Installation de traitement selon l'une des revendications 2 à 7, **caractérisée en ce que** le dispositif de synchronisation (6) et le dispositif de contrôle (7) sont mis sous tension pendant le fonctionnement du (des) dispositif(s) d'application (22, 23).

9. Installation de traitement selon l'une des revendications 2 à 8, **caractérisée en ce que** les entraînements (4) des portiques (2, 3) sont réglables en vitesse.

10. Installation de traitement selon l'une des revendications 2 à 9, **caractérisée en ce que** la vitesse d'un portique (2, 3) est réglable en fonction de la vitesse de l'autre portique (3, 2) en fonctionnement synchrone.

11. Installation de traitement selon la revendication 10, **caractérisée en ce que** la vitesse du portique (2) équipé du dispositif d'application (22, 23) est réglable.

12. Installation de traitement selon l'une des revendications 2 à 11, **caractérisée en ce que** le dispositif de synchronisation (6) est connecté à une commande (5) et comporte un compteur de vitesse ou de parcours (27) pour les deux portiques (2, 3).

13. Installation de traitement selon l'une des revendications 2 à 12, **caractérisée en ce que** le dispositif de contrôle (7) est connecté à la commande (5).

14. Installation de traitement selon l'une des revendications 2 à 13, **caractérisée en ce qu'**un dispositif d'application (22) est disposé à l'extrémité avant du portique (2) dans la direction de déplacement (26).

15. Installation de traitement selon l'une des revendications 2 à 14, **caractérisée en ce que** le portique (2) avec le dispositif d'application (22) comporte un dispositif de séchage (19).
